# EUROPEAN PATENT APPLICATION

(11) **EP 4 198 728 A1**
(43) Date of publication of application: **21.06.2023**
(21) Application number: 22203436.5
(22) Date of filing: 25.10.2022
(51) Int. Cl.: G06F 9/50

(54) **METHOD AND APPARATUS TO PERFORM WORKLOAD MANAGEMENT IN A DISAGGREGATED COMPUTING SYSTEM**

(30) Priority: 20.12.2021 US 202117556096
(71) Applicant: Intel Corporation, Santa Clara, CA 95054 (US)
(72) Inventor: Fargo, Farah E., Hudson, MA 01749 (US); Olson, Lucienne, Hillsboro, OR 97124 (US); Wouhaybi, Rita H., Portland, OR 97229 (US); Mwove, Patricia M., Chandler, AZ 85286 (US); Warnes, Lidia, Roseville, CA 95747 (US); Kenfack Sadate, Aline C., Hillsboro, OR 97124 (US)
(74) Representative: Samson & Partner Patentanwälte mbB

(57) **Abstract**

A workload orchestrator in a disaggregated computing system manages Infrastructure Processing Units (IPUs) in a bidirectional way to provide redundancy and optimal resource configurations. Light-weight machine learning capabilities are used by the IPUs and the workload orchestrator to profile workloads, specify a redundancy level for each workload phase and predict a configuration that can provide optimal performance and security for the disaggregated computing system.

## Description

### FIELD

This disclosure relates to disaggregated computing and in particular to workload management in a disaggregated computing system.

### BACKGROUND

Cloud computing provides access to servers, storage, databases, and a broad set of application services over the Internet. A cloud service provider offers cloud services such as network services and business applications that are hosted in servers in one or more data centers that can be accessed by companies or individuals over the Internet. Hyperscale cloud-service providers typically have hundreds of thousands of servers. Each server in a hyperscale cloud includes storage devices to store user data, for example, user data for business intelligence, data mining, analytics, social media and microservices. The cloud service provider generates revenue from companies and individuals (also referred to as tenants) that use the cloud services.

Disaggregated computing or Composable Disaggregated Infrastructure (CDI) is an emerging technology that makes use of high bandwidth, low-latency interconnects to aggregate compute, storage, memory, and networking fabric resources into shared resource pools that can be provisioned on demand.

### BRIEF DESCRIPTION OF THE DRAWINGS

Features of embodiments of the claimed subject matter will become apparent as the following detailed description proceeds, and upon reference to the drawings, in which like numerals depict like parts, and in which:
FIG. 1 is a simplified diagram of at least one embodiment of a data center for executing workloads with disaggregated resources;
FIG. 2 is a simplified diagram of at least one embodiment of a pod that may be included in a data center;
FIG. 3 is a simplified block diagram of at least one embodiment of a top side of a
   node;
FIG. 4 is a simplified block diagram of at least one embodiment of a bottom side of a node;
FIG. 5 is a simplified block diagram of at least one embodiment of a compute node;
FIG. 6 is a simplified block diagram of at least one embodiment of an accelerator node usable in a data center;
FIG. 7 is a simplified block diagram of at least one embodiment of a storage node usable in a data center;
FIG. 8 is a simplified block diagram of at least one embodiment of a memory node usable in a data center;
FIG. 9 depicts a system for executing one or more workloads;
FIG. 10 illustrates a compute node that includes an IPU and an xPU;
FIG. 11 is a simplified block diagram of a system that includes a smart engine in an orchestrator server and the compute node shown in FIG. 10;
FIG. 12 illustrates types of metadata that can be stored in a metadata workload phase entry for the configuration of a workload phase in workload training data in the database;
FIG. 13 is a block diagram of a system that includes the workload orchestrator and workload manager in the orchestrator server shown in FIG. 11 and a plurality of compute nodes to perform jobs with flexible resource requirements;
FIG. 14 is a flowgraph illustrating a method to provide resources to the compute nodes shown in FIG. 13 for jobs with dynamic resource requirements;
FIG. 15 is a block diagram of a system that includes the workload orchestrator and workload manager in the orchestrator server shown in FIG. 11 and zones that include compute nodes; and
FIG. 16 is a flowgraph illustrating a method performed in the workload orchestrator to deploy a workload in the system shown in FIG. 15.

Although the following Detailed Description will proceed with reference being made to illustrative embodiments of the claimed subject matter, many alternatives, modifications, and variations thereof will be apparent to those skilled in the art. Accordingly, it is intended that the claimed subject matter be viewed broadly, and be defined only as set forth in the accompanying claims.

### DESCRIPTION OF EMBODIMENTS

Services abstraction such as microservices and Functions as a Service (FaaS) or Serviceless are driving loosely coupled, dynamically orchestrated services which require partitioning of compute or XPU and standardizing services allowing for Backend as a Service (BaaS). An XPU or xPU can refer to a graphics processing unit (GPU), general purpose GPU (GPGPU), field programmable gate array (FPGA), Accelerated Processing Unit (APU), accelerator or another processor. These can also include functions such as quality of service enforcement, tracing, performance and error monitoring, logging, authentication, service mesh, data transformation, etc. With massive levels of data processing, data may not be stored local to compute and processing requirements can exceed single XPU scale. These are driving a growth in the communication between services.

Cloud service providers (CSPs) are evolving their hardware platforms by offering central processing units (CPUs), general purpose graphics processing units (GPGPUs), custom XPUs, and pooled storage and memory (for example, DDR, persistent memory, 3D XPoint, Optane, or memory devices that use chalcogenide glass). CSPs are vertically integrating these with custom orchestration control planes to expose these as services to users.

An Infrastructure Processing Unit (IPU) is a programmable network device that intelligently manages system-level resources by securely accelerating networking and storage infrastructure functions in a disaggregated computing system data center. Systems can be composed differently based at least on how functions are mapped and offloaded.

Failures can occur in the IPU or XPU compute service or management node, for example, system power failures or communication link down, faults, errors, or failures, bit errors, and packet loss during communication.

Resiliency can be provided in the disaggregated computing system via redundant operating stations with hardware or software result comparison, triple modular voting, and redundant computing stations as well as N-version programming where different versions are created and executed. However, these techniques are ad-hoc, extremely fine granulated and provide resiliency against one type of failure.

However, the IPU does not have the capability of being available or a self-defending system to continue to operate successfully in case of a failure that occurs during operation. In addition, the IPU is a service endpoint and is not aware of the resources that are used to provide services.

An orchestrator server in a disaggregated computing system manages IPUs in a bidirectional way to provide redundancy and optimal configuration of resources. Light-weight machine learning capabilities are used by the IPUs and the orchestrator server to profile workloads, specify a redundancy level for each workload phase and predict a configuration that can provide optimal performance and security for the disaggregated computing system.

Various embodiments and aspects of the inventions will be described with reference to details discussed below, and the accompanying drawings will illustrate the various embodiments. The following description and drawings are illustrative of the invention and are not to be construed as limiting the invention. Numerous specific details are described to provide a thorough understanding of various embodiments of the present invention. However, in certain instances, well-known or conventional details are not described in order to provide a concise discussion of embodiments of the present inventions.

Reference in the specification to "one embodiment" or "an embodiment" means that a particular feature, structure, or characteristic described in conjunction with the embodiment can be included in at least one embodiment of the invention. The appearances of the phrase "in one embodiment" in various places in the specification do not necessarily all refer to the same embodiment.

Various embodiments and aspects of the inventions will be described with reference to details discussed below, and the accompanying drawings will illustrate the various embodiments. The following description and drawings are illustrative of the invention and are not to be construed as limiting the invention. Numerous specific details are described to provide a thorough understanding of various embodiments of the present invention. However, in certain instances, well-known or conventional details are not described in to provide a concise discussion of embodiments of the present inventions.

Reference in the specification to "one embodiment" or "an embodiment" means that a particular feature, structure, or characteristic described in conjunction with the embodiment can be included in at least one embodiment of the invention. The appearances of the phrase "in one embodiment" in various places in the specification do not necessarily all refer to the same embodiment.

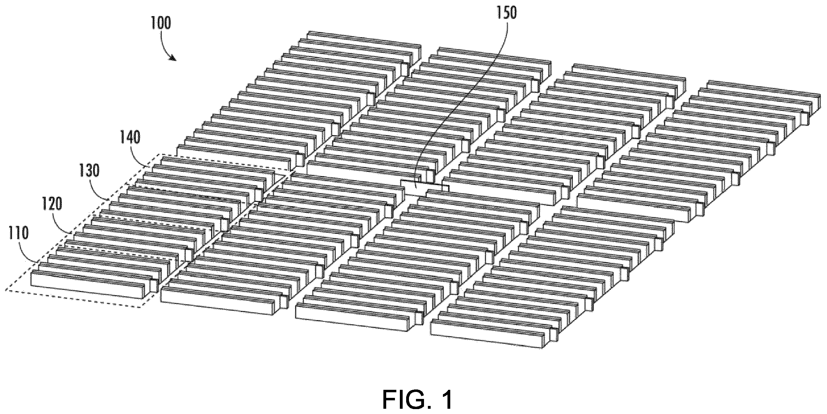

FIG. 1 depicts a data center 100 in which disaggregated resources may cooperatively execute one or more workloads (for example, applications on behalf of users (customers)) that includes multiple pods 110, 120, 130, 140, a pod being or including one or more rows of racks. Of course, although data center 100 is shown with multiple pods, in some embodiments, the data center 100 may be embodied as a single pod. As described in more detail herein, each rack houses multiple nodes, some of which may be equipped with one or more type of resources (for example, memory devices, data storage devices, accelerator devices, general purpose processors). Resources can be logically coupled to form a composed node or composite node, which can act as, for example, a server to perform a job, workload or microservices. In the illustrative embodiment, the nodes in each pod 110, 120, 130, 140 are connected to multiple pod switches (for example, switches that route data communications to and from nodes within the pod). The pod switches, in turn, connect with spine switches 150 that switch communications among pods (for example, the pods 110, 120, 130, 140) in the data center 100. In some embodiments, the nodes may be connected with a fabric using Intel^{®} Omni-Path technology. In other embodiments, the nodes may be connected with other fabrics, such as InfiniBand or Ethernet or PCI Express or direct optical interconnect. As described in more detail herein, resources within nodes in the data center 100 may be allocated to a group (referred to herein as a "managed node") containing resources from one or more nodes to be collectively utilized in the execution of a workload. The workload can execute as if the resources belonging to the managed node were located on the same node. The resources in a managed node may belong to nodes belonging to different racks, and even to different pods 110, 120, 130, 140. As such, some resources of a single node may be allocated to one managed node while other resources of the same node are allocated to a different managed node (for example, one processor assigned to one managed node and another processor of the same node assigned to a different managed node).

A data center comprising disaggregated resources, such as data center 100, can be used in a wide variety of contexts, such as enterprise, government, cloud service provider, and communications service provider (for example, Telcos), as well in a wide variety of sizes, from cloud service provider mega-data centers that consume over 60,000 sq. ft. to single- or multi-rack installations for use in base stations.

The disaggregation of resources to nodes comprised predominantly of a single type of resource (for example, compute nodes comprising primarily compute resources, memory nodes containing primarily memory resources), and the selective allocation and deallocation of the disaggregated resources to form a managed node assigned to execute a workload improves the operation and resource usage of the data center 100 relative to typical data centers comprised of hyperconverged servers containing compute, memory, storage and perhaps additional resources in a single chassis. For example, because nodes predominantly contain resources of a particular type, resources of a given type can be upgraded independently of other resources. Additionally, because different resource types (processors, storage, accelerators, etc.) typically have different refresh rates, greater resource utilization and reduced total cost of ownership may be achieved. For example, a data center operator can upgrade the processors throughout their facility by only swapping out the compute nodes. In such a case, accelerator and storage resources may not be contemporaneously upgraded and, rather, may be allowed to continue operating until those resources are scheduled for their own refresh. Resource utilization may also increase. For example, if managed nodes are composed based on requirements of the workloads that will be running on them, resources within a node are more likely to be fully utilized. Such utilization may allow for more managed nodes to run in a data center with a given set of resources, or for a data center expected to run a given set of workloads, to be built using fewer resources.

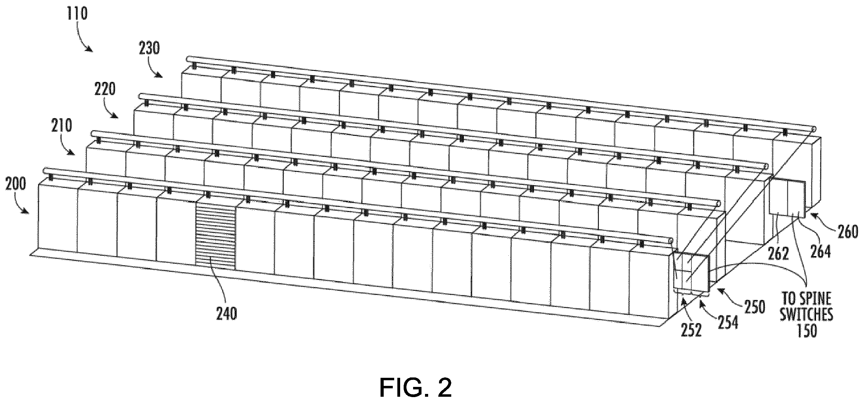

FIG. 2 depicts the pod 110 in data center 100. The pod 110 can include a set of rows 200, 210, 220, 230 of racks 240. Each rack 240 may house multiple nodes (for example, sixteen nodes) and provide power and data connections to the housed nodes, as described in more detail herein. In the illustrative embodiment, the racks in each row 200, 210, 220, 230 are connected to multiple pod switches 250, 260. The pod switch 250 includes a set of ports 252 to which the nodes of the racks of the pod 110 are connected and another set of ports 254 that connect the pod 110 to the spine switches 150 to provide connectivity to other pods in the data center 100. Similarly, the pod switch 260 includes a set of ports 262 to which the nodes of the racks of the pod 110 are connected and a set of ports 264 that connect the pod 110 to the spine switches 150. As such, the use of the pair of switches 250, 260 provides an amount of redundancy to the pod 110. For example, if either of the switches 250, 260 fails, the nodes in the pod 110 may still maintain data communication with the remainder of the data center 100 (for example, nodes of other pods) through the other switch 250, 260. Furthermore, in the illustrative embodiment, the switches 150, 250, 260 may be embodied as dual-mode optical switches, capable of routing both Ethernet protocol communications carrying Internet Protocol (IP) packets and communications according to a second, high-performance link-layer protocol (for example, PCI Express or Compute Express Link) via optical signaling media of an optical fabric.

It should be appreciated that each of the other pods 120, 130, 140 (as well as any additional pods of the data center 100) may be similarly structured as, and have components similar to, the pod 110 shown in and described in regard to FIG. 2 (for example, each pod may have rows of racks housing multiple nodes as described above). Additionally, while two pod switches 250, 260 are shown, it should be understood that in other embodiments, each pod 110, 120, 130, 140 may be connected to a different number of pod switches, providing even more failover capacity. Of course, in other embodiments, pods may be arranged differently than the rows-of-racks configuration shown in FIGS. 1-2. For example, a pod may be embodied as multiple sets of racks in which each set of racks is arranged radially, for example, the racks are equidistant from a center switch.

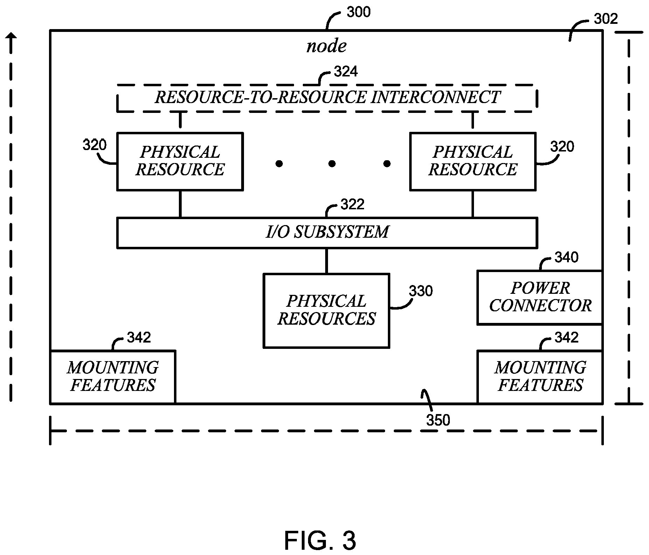

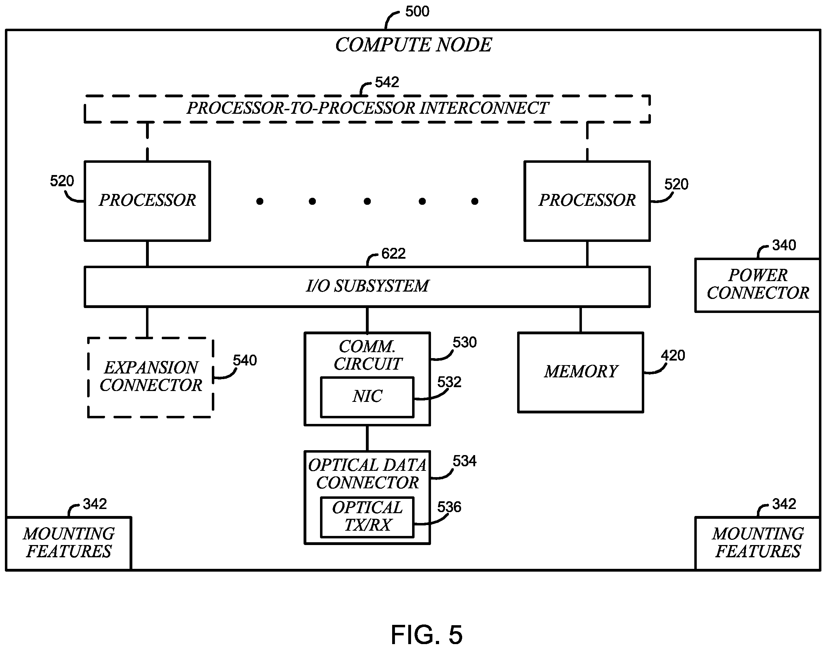

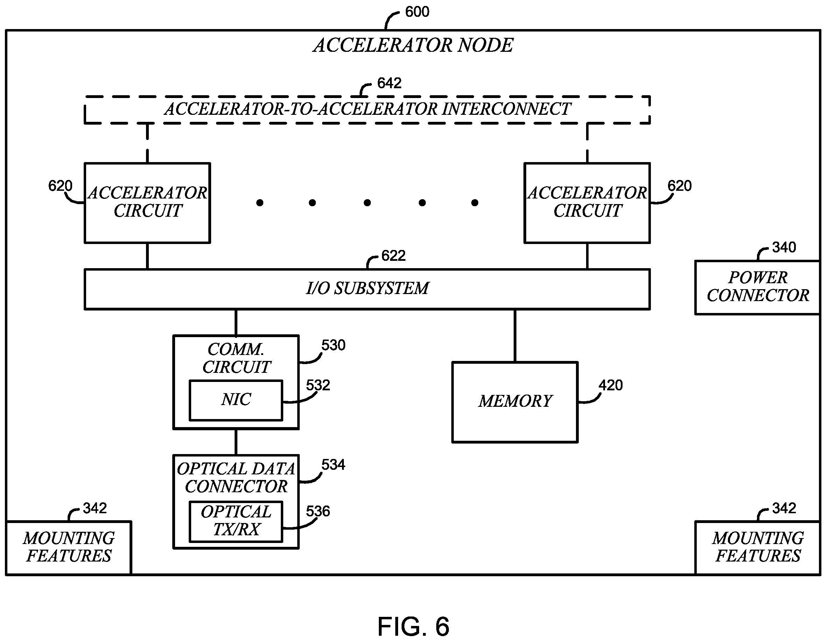

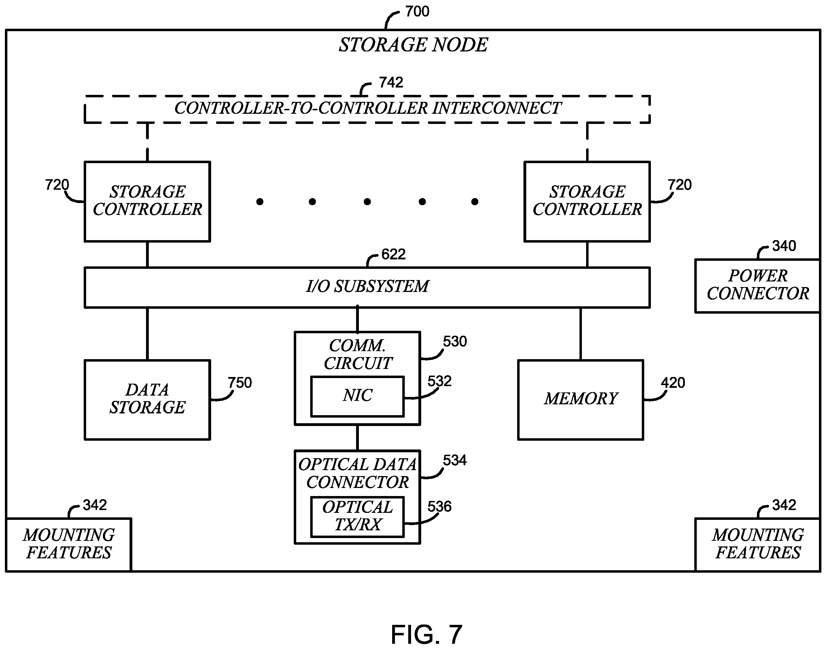

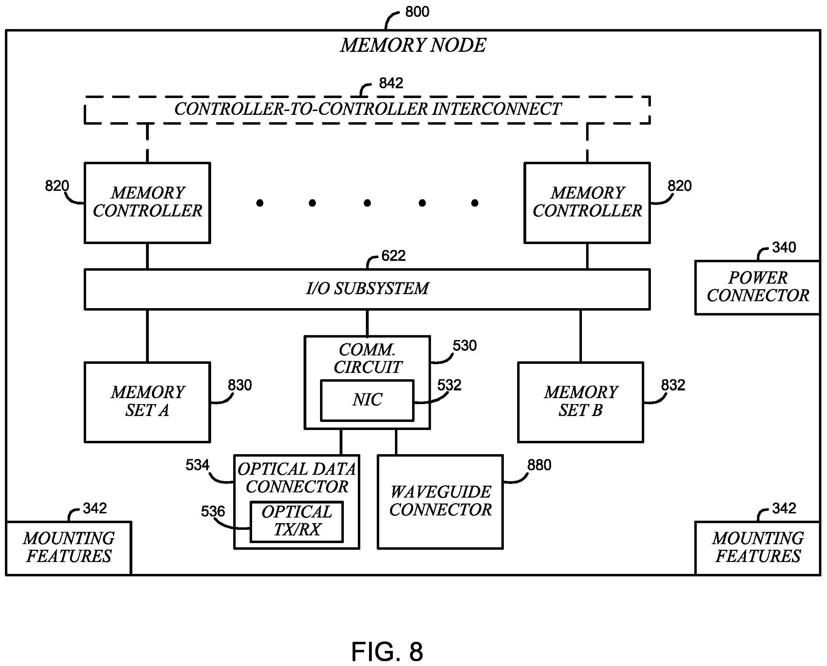

Referring now to FIG. 3, node 300, in the illustrative embodiment, is configured to be mounted in a corresponding rack 240 of the data center 100 as discussed above. In some embodiments, each node 300 may be optimized or otherwise configured for performing particular tasks, such as compute tasks, acceleration tasks, data storage tasks, etc. For example, the node 300 may be embodied as a compute node 500 as discussed below in regard to FIG. 5, an accelerator node 600 as discussed below in regard to FIG. 6, a storage node 700 as discussed below in regard to FIG. 7, or as a node optimized or otherwise configured to perform other specialized tasks, such as a memory node 800, discussed below in regard to FIG. 8. Each rack 240 may contain one or more nodes of a single or multiple node types - compute, storage, accelerator, memory, or others.

As discussed above, the illustrative node 300 includes a circuit board substrate 302, which supports various physical resources (for example, electrical components) mounted thereon.

As discussed above, the illustrative node 300 includes one or more physical resources 320 mounted to a top side 350 of the circuit board substrate 302. Although two physical resources 320 are shown in FIG. 3, it should be appreciated that the node 300 may include one, two, or more physical resources 320 in other embodiments. The physical resources 320 may be embodied as any type of processor, controller, or other compute circuit capable of performing various tasks such as compute functions and/or controlling the functions of the node 300 depending on, for example, the type or intended functionality of the node 300. For example, as discussed in more detail below, the physical resources 320 may be embodied as high-performance processors in embodiments in which the node 300 is embodied as a compute node, as accelerator co-processors or circuits in embodiments in which the node 300 is embodied as an accelerator node, storage controllers in embodiments in which the node 300 is embodied as a storage node, or a set of memory devices in embodiments in which the node 300 is embodied as a memory node.

The node 300 also includes one or more additional physical resources 330 mounted to the top side 350 of the circuit board substrate 302. In the illustrative embodiment, the additional physical resources include a network interface controller (NIC) as discussed in more detail below. Of course, depending on the type and functionality of the node 300, the physical resources 330 may include additional or other electrical components, circuits, and/or devices in other embodiments.

The physical resources 320 can be communicatively coupled to the physical resources 330 via an input/output (I/O) subsystem 322. The I/O subsystem 322 may be embodied as circuitry and/or components to facilitate input/output operations with the physical resources 320, the physical resources 330, and/or other components of the node 300. For example, the I/O subsystem 322 may be embodied as, or otherwise include, memory controller hubs, input/output control hubs, integrated sensor hubs, firmware devices, communication links (for example, point-to-point links, bus links, wires, cables, waveguides, light guides, printed circuit board traces, etc.), and/or other components and subsystems to facilitate the input/output operations.

In some embodiments, the node 300 may also include a resource-to-resource interconnect 324. The resource-to-resource interconnect 324 may be embodied as any type of communication interconnect capable of facilitating resource-to-resource communications. In the illustrative embodiment, the resource-to-resource interconnect 324 is embodied as a high-speed point-to-point interconnect (for example, faster than the I/O subsystem 322). For example, the resource-to-resource interconnect 324 may be embodied as a QuickPath Interconnect (QPI), an UltraPath Interconnect (UPI), PCI express (PCIe), or other high-speed point-to-point interconnect dedicated to resource-to-resource communications.

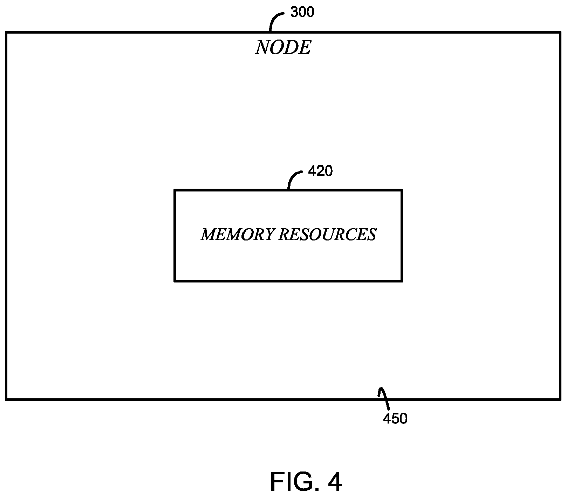

The node 300 also includes a power connector 340 configured to mate with a corresponding power connector of the rack 240 when the node 300 is mounted in the corresponding rack 240. The node 300 receives power from a power supply of the rack 240 via the power connector 340 to supply power to the various electrical components of the node 300. That is, the node 300 does not include any local power supply (for example, an on-board power supply) to provide power to the electrical components of the node 300. The exclusion of a local or on-board power supply facilitates the reduction in the overall footprint of the circuit board substrate 302, which may increase the thermal cooling characteristics of the various electrical components mounted on the circuit board substrate 302 as discussed above. In some embodiments, voltage regulators are placed on a bottom side 450 (see FIG. 4) of the circuit board substrate 302 directly opposite of the processors 520 (see FIG. 5), and power is routed from the voltage regulators to the processors 520 by vias extending through the circuit board substrate 302. Such a configuration provides an increased thermal budget, additional current and/or voltage, and better voltage control relative to typical printed circuit boards in which processor power is delivered from a voltage regulator, in part, by printed circuit traces.

In some embodiments, the node 300 may also include mounting features 342 configured to mate with a mounting arm, or other structure, of a robot to facilitate the placement of the node 300 in a rack 240 by the robot. The mounting features 342 may be embodied as any type of physical structures that allow the robot to grasp the node 300 without damaging the circuit board substrate 302 or the electrical components mounted thereto. For example, in some embodiments, the mounting features 342 may be embodied as non-conductive pads attached to the circuit board substrate 302. In other embodiments, the mounting features may be embodied as brackets, braces, or other similar structures attached to the circuit board substrate 302. The particular number, shape, size, and/or make-up of the mounting feature 342 may depend on the design of the robot configured to manage the node 300.

Referring now to FIG. 4, in addition to the physical resources 330 mounted on the top side 350 of the circuit board substrate 302, the node 300 also includes one or more memory devices 420 mounted to a bottom side 450 of the circuit board substrate 302. That is, the circuit board substrate 302 can be embodied as a double-sided circuit board. The physical resources 320 can be communicatively coupled to memory devices 420 via the I/O subsystem 322. For example, the physical resources 320 and the memory devices 420 may be communicatively coupled by one or more vias extending through the circuit board substrate 302. A physical resource 320 may be communicatively coupled to a different set of one or more memory devices 420 in some embodiments. Alternatively, in other embodiments, each physical resource 320 may be communicatively coupled to each memory device 420.

The memory devices 420 may be embodied as any type of memory device capable of storing data for the physical resources 320 during operation of the node 300, such as any type of volatile (for example, dynamic random access memory (DRAM), etc.) or non-volatile memory. Volatile memory may be a storage medium that requires power to maintain the state of data stored by the medium. Non-limiting examples of volatile memory may include various types of random access memory (RAM), such as dynamic random access memory (DRAM) or static random access memory (SRAM). One particular type of DRAM that may be used in a memory module is synchronous dynamic random access memory (SDRAM). In particular embodiments, DRAM of a memory component may comply with a standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces.

In one embodiment, the memory device is a block addressable memory device, such as those based on NAND or NOR technologies, for example, multi-threshold level NAND flash memory and NOR flash memory. A block can be any size such as but not limited to 2KB, 4KB, 5KB, and so forth. A memory device may also include next-generation nonvolatile devices, such as Intel Optane^{®} memory or other byte addressable write-in-place nonvolatile memory devices, for example, memory devices that use chalcogenide glass, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. The memory device may refer to the die itself and/or to a packaged memory product. In some embodiments, the memory device may comprise a transistor-less stackable cross point architecture in which memory cells sit at the intersection of word lines and bit lines and are individually addressable and in which bit storage is based on a change in bulk resistance.

Referring now to FIG. 5, in some embodiments, the node 300 may be embodied as a compute node 500. The compute node 500 can be configured to perform compute tasks. Of course, as discussed above, the compute node 500 may rely on other nodes, such as acceleration nodes and/or storage nodes, to perform compute tasks.

In the illustrative compute node 500, the physical resources 320 are embodied as processors 520. Although only two processors 520 are shown in FIG. 5, it should be appreciated that the compute node 500 may include additional processors 520 in other embodiments. Illustratively, the processors 520 are embodied as high-performance processors 520 and may be configured to operate at a relatively high power rating.

In some embodiments, the compute node 500 may also include a processor-to-processor interconnect 542. Processor-to-processor interconnect 542 may be embodied as any type of communication interconnect capable of facilitating processor-to-processor interconnect 542 communications. In the illustrative embodiment, the processor-to-processor interconnect 542 is embodied as a high-speed point-to-point interconnect (for example, faster than the I/O subsystem 322). For example, the processor-to-processor interconnect 542 may be embodied as a QuickPath Interconnect (QPI), an UltraPath Interconnect (UPI), or other high-speed point-to-point interconnect dedicated to processor-to-processor communications (for example, PCIe or CXL).

The compute node 500 also includes a communication circuit 530. The illustrative communication circuit 530 includes a network interface controller (NIC) 532, which may also be referred to as a host fabric interface (HFI). The NIC 532 may be embodied as, or otherwise include, any type of integrated circuit, discrete circuits, controller chips, chipsets, add-in-boards, daughtercards, network interface cards, or other devices that may be used by the compute node 500 to connect with another compute device (for example, with other nodes 300). In some embodiments, the NIC 532 may be embodied as part of a system-on-a-chip (SoC) that includes one or more processors, or included on a multichip package that also contains one or more processors. In some embodiments, the NIC 532 may include a local processor (not shown) and/or a local memory (not shown) that are both local to the NIC 532. In such embodiments, the local processor of the NIC 532 may be capable of performing one or more of the functions of the processors 520. Additionally or alternatively, in such embodiments, the local memory of the NIC 532 may be integrated into one or more components of the compute node at the board level, socket level, chip level, and/or other levels. In some examples, a network interface includes a network interface controller or a network interface card. In some examples, a network interface can include one or more of a network interface controller (NIC) 532, a host fabric interface (HFI), a host bus adapter (HBA), network interface connected to a bus or connection (for example, PCIe, CXL, DDR, and so forth). In some examples, a network interface can be part of a switch or a system-on-chip (SoC).

The communication circuit 530 is communicatively coupled to an optical data connector 534. The optical data connector 534 is configured to mate with a corresponding optical data connector of a rack when the compute node 500 is mounted in the rack. Illustratively, the optical data connector 534 includes a plurality of optical fibers which lead from a mating surface of the optical data connector 534 to an optical transceiver 536. The optical transceiver 536 is configured to convert incoming optical signals from the rack-side optical data connector to electrical signals and to convert electrical signals to outgoing optical signals to the rack-side optical data connector. Although shown as forming part of the optical data connector 534 in the illustrative embodiment, the optical transceiver 536 may form a portion of the communication circuit 530 or even processor 520 in other embodiments.

In some embodiments, the compute node 500 may also include an expansion connector 540. In such embodiments, the expansion connector 540 is configured to mate with a corresponding connector of an expansion circuit board substrate to provide additional physical resources to the compute node 500. The additional physical resources may be used, for example, by the processors 520 during operation of the compute node 500. The expansion circuit board substrate may be substantially similar to the circuit board substrate 302 discussed above and may include various electrical components mounted thereto. The particular electrical components mounted to the expansion circuit board substrate may depend on the intended functionality of the expansion circuit board substrate. For example, the expansion circuit board substrate may provide additional compute resources, memory resources, and/or storage resources. As such, the additional physical resources of the expansion circuit board substrate may include, but is not limited to, processors, memory devices, storage devices, and/or accelerator circuits including, for example, field programmable gate arrays (FPGA), application-specific integrated circuits (ASICs), security co-processors, graphics processing units (GPUs), machine learning circuits, or other specialized processors, controllers, devices, and/or circuits.

Referring now to FIG. 6, in some embodiments, the node 300 may be embodied as an accelerator node 600. The accelerator node 600 is configured to perform specialized compute tasks, such as machine learning, encryption, hashing, or other computational-intensive task. In some embodiments, for example, a compute node 500 may offload tasks to the accelerator node 600 during operation. The accelerator node 600 includes various components similar to components of the node 300 and/or compute node 500, which have been identified in FIG. 6 using the same reference numbers.

In the illustrative accelerator node 600, the physical resources 320 are embodied as accelerator circuits 620. Although only two accelerator circuits 620 are shown in FIG. 6, it should be appreciated that the accelerator node 600 may include additional accelerator circuits 620 in other embodiments. The accelerator circuits 620 may be embodied as any type of processor, co-processor, compute circuit, or other device capable of performing compute or processing operations. For example, the accelerator circuits 620 may be embodied as, for example, central processing units, cores, field programmable gate arrays (FPGA), application-specific integrated circuits (ASICs), programmable control logic (PCL), security co-processors, graphics processing units (GPUs), neuromorphic processor units, quantum computers, machine learning circuits, or other specialized processors, controllers, devices, and/or circuits.

In some embodiments, the accelerator node 600 may also include an accelerator-to-accelerator interconnect 642. Similar to the resource-to-resource interconnect 324 of the node 300 discussed above, the accelerator-to-accelerator interconnect 642 may be embodied as any type of communication interconnect capable of facilitating accelerator-to-accelerator communications. In the illustrative embodiment, the accelerator-to-accelerator interconnect 642 is embodied as a high-speed point-to-point interconnect (for example, faster than the I/O subsystem 622). For example, the accelerator-to-accelerator interconnect 642 may be embodied as a QuickPath Interconnect (QPI), an UltraPath Interconnect (UPI), or other high-speed point-to-point interconnect dedicated to processor-to-processor communications. In some embodiments, the accelerator circuits 620 may be daisy-chained with a primary accelerator circuit 620 connected to the NIC 532 and memory 420 through the I/O subsystem 322 and a secondary accelerator circuit 620 connected to the NIC 532 and memory 420 through a primary accelerator circuit 620.

Referring now to FIG. 7, in some embodiments, the node 300 may be embodied as a storage node 700. The storage node 700 is configured to store data in a data storage 750 local to the storage node 700. For example, during operation, a compute node 500 or an accelerator node 600 may store and retrieve data from the data storage 750 of the storage node 700. The storage node 700 includes various components similar to components of the node 300 and/or the compute node 500, which have been identified in FIG. 7 using the same reference numbers.

In the illustrative storage node 700, the physical resources 320 are embodied as storage controllers 720. Although only two storage controllers 720 are shown in FIG. 7, it should be appreciated that the storage node 700 may include additional storage controllers 720 in other embodiments. The storage controllers 720 may be embodied as any type of processor, controller, or control circuit capable of controlling the storage and retrieval of data into the data storage 750 based on requests received via the communication circuit 530. In the illustrative embodiment, the storage controllers 720 are embodied as relatively low-power processors or controllers. For example, in some embodiments, the storage controllers 720 may be configured to operate at a power rating of about 75 watts.

In some embodiments, the storage node 700 may also include a controller-to-controller interconnect 742. Similar to the resource-to-resource interconnect 324 of the node 300 discussed above, the controller-to-controller interconnect 742 may be embodied as any type of communication interconnect capable of facilitating controller-to-controller communications. In the illustrative embodiment, the controller-to-controller interconnect 742 is embodied as a high-speed point-to-point interconnect (for example, faster than the I/O subsystem 622). For example, the controller-to-controller interconnect 742 may be embodied as a QuickPath Interconnect (QPI), an UltraPath Interconnect (UPI), or other high-speed point-to-point interconnect dedicated to processor-to-processor communications.

Referring now to FIG. 8, in some embodiments, the node 300 may be embodied as a memory node 800. The memory node 800 is configured to provide other nodes 300 (for example, compute nodes 500, accelerator nodes 600, etc.) with access to a pool of memory (for example, in two or more sets 830, 832 of memory devices 420) local to the storage node 700. For example, during operation, a compute node 500 or an accelerator node 600 may remotely write to and/or read from one or more of the memory sets 830, 832 of the memory node 800 using a logical address space that maps to physical addresses in the memory sets 830, 832.

In the illustrative memory node 800, the physical resources 320 are embodied as memory controllers 820. Although only two memory controllers 820 are shown in FIG. 8, it should be appreciated that the memory node 800 may include additional memory controllers 820 in other embodiments. The memory controllers 820 may be embodied as any type of processor, controller, or control circuit capable of controlling the writing and reading of data into the memory sets 830, 832 based on requests received via the communication circuit 530. In the illustrative embodiment, each memory controller 820 is connected to a corresponding memory set 830, 832 to write to and read from memory devices 420 within the corresponding memory set 830, 832 and enforce any permissions (for example, read, write, etc.) associated with node 300 that has sent a request to the memory node 800 to perform a memory access operation (for example, read or write).

In some embodiments, the memory node 800 may also include a controller-to-controller interconnect 842. Similar to the resource-to-resource interconnect 324 of the node 300 discussed above, the controller-to-controller interconnect 842 may be embodied as any type of communication interconnect capable of facilitating controller-to-controller communications. In the illustrative embodiment, the controller-to-controller interconnect 842 is embodied as a high-speed point-to-point interconnect (for example, faster than the I/O subsystem 622). For example, the controller-to-controller interconnect 842 may be embodied as a QuickPath Interconnect (QPI), an UltraPath Interconnect (UPI), or other high-speed point-to-point interconnect dedicated to processor-to-processor communications. As such, in some embodiments, a memory controller 820 may access, through the controller-to-controller interconnect 842, memory that is within the memory set 832 associated with another memory controller 820. In some embodiments, a scalable memory controller is made of multiple smaller memory controllers, referred to herein as "chiplets", on a memory node (for example, the memory node 800). The chiplets may be interconnected (for example, using EMIB (Embedded Multi-Die Interconnect Bridge)). The combined chiplet memory controller may scale up to a relatively large number of memory controllers and I/O ports, (for example, up to 16 memory channels). In some embodiments, the memory controllers 820 may implement a memory interleave (for example, one memory address is mapped to the memory set 830, the next memory address is mapped to the memory set 832, and the third address is mapped to the memory set 830, etc.). The interleaving may be managed within the memory controllers 820, or from CPU sockets (for example, of the compute node 500) across network links to the memory sets 830, 832, and may improve the latency associated with performing memory access operations as compared to accessing contiguous memory addresses from the same memory device.

Further, in some embodiments, the memory node 800 may be connected to one or more other nodes 300 (for example, in the same rack 240 or an adjacent rack 240) through a waveguide, using the waveguide connector 880. In the illustrative embodiment, the waveguides are 64 millimeter waveguides that provide 16 Rx (for example, receive) lanes and 16 Tx (for example, transmit) lanes. Each lane, in the illustrative embodiment, is either 16 GHz or 32 GHz. In other embodiments, the frequencies may be different. Using a waveguide may provide high throughput access to the memory pool (for example, the memory sets 830, 832) to another node (for example, a node 300 in the same rack 240 or an adjacent rack 240 as the memory node 800) without adding to the load on the optical data connector 534.

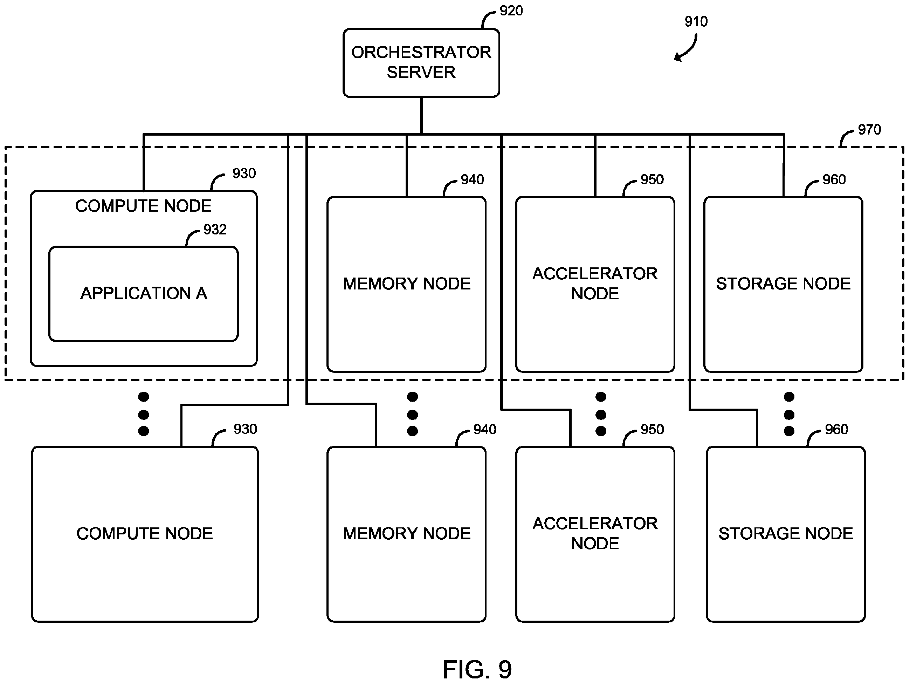

Referring now to FIG. 9, a system 910 for executing one or more workloads (for example, applications) may be implemented. In the illustrative embodiment, the system 910 includes an orchestrator server 920, which may be embodied as a managed node comprising a compute device (for example, a processor 520 on a compute node 500) executing management software (for example, a cloud operating environment, such as OpenStack) that is communicatively coupled to multiple nodes 300 including a large number of compute nodes 930 (for example, each similar to the compute node 500), memory nodes 940 (for example, each similar to the memory node 800), accelerator nodes 950 (for example, each similar to the accelerator node 600), and storage nodes 960 (for example, each similar to the storage node 700). One or more of the nodes 930, 940, 950, 960 may be grouped into a managed node 970, such as by the orchestrator server 920, to collectively perform a workload (for example, an application 932 executed in a virtual machine or in a container).

The managed node 970 may be embodied as an assembly of physical resources 320, such as processors 520, memory resources 420, accelerator circuits 620, or data storage 750, from the same or different nodes 300. Physical resources 320 from the same compute node 500 or the same memory node 800 or the same accelerator node 600 or the same storage node 700 can be assigned to a single managed node 970. Alternatively, physical resources 320 from the same node 300 can be assigned to different managed nodes 970. Further, the managed node may be established, defined, or "spun up" by the orchestrator server 920 at the time a workload is to be assigned to the managed node or at any other time, and may exist regardless of whether any workloads are presently assigned to the managed node. In the illustrative embodiment, the orchestrator server 920 may selectively allocate and/or deallocate physical resources 320 from the nodes 300 and/or add or remove one or more nodes 300 from the managed node 970 as a function of quality of service (QoS) targets (for example, a target throughput, a target latency, a target number instructions per second, etc.) associated with a service level agreement for the workload (for example, the application 932). In doing so, the orchestrator server 920 may receive telemetry data indicative of performance conditions (for example, throughput, latency, instructions per second, etc.) in each node 300 of the managed node 970 and compare the telemetry data to the quality of service targets to determine whether the quality of service targets are being satisfied. The orchestrator server 920 may additionally determine whether one or more physical resources may be deallocated from the managed node 970 while still satisfying the QoS targets, thereby freeing up those physical resources for use in another managed node (for example, to execute a different workload). Alternatively, if the QoS targets are not presently satisfied, the orchestrator server 920 may determine to dynamically allocate additional physical resources to assist in the execution of the workload (for example, the application 932) while the workload is executing. Similarly, the orchestrator server 920 may determine to dynamically deallocate physical resources from a managed node if the orchestrator server 920 determines that deallocating the physical resource would result in QoS targets still being met.

Additionally, in some embodiments, the orchestrator server 920 may identify trends in the resource utilization of the workload (for example, the application 932), such as by identifying phases of execution (for example, time periods in which different operations, each having different resource utilizations characteristics, are performed) of the workload (for example, the application 932) and pre-emptively identifying available resources in the data center and allocating them to the managed node 970 (for example, within a predefined time period of the associated phase beginning). In some embodiments, the orchestrator server 920 may model performance based on various latencies and a distribution scheme to place workloads among compute nodes and other resources (for example, accelerator nodes, memory nodes, storage nodes) in the data center. For example, the orchestrator server 920 may utilize a model that accounts for the performance of resources on the nodes 300 (for example, FPGA performance, memory access latency, etc.) and the performance (for example, congestion, latency, bandwidth) of the path through the network to the resource (for example, FPGA). As such, the orchestrator server 920 may determine which resource(s) should be used with which workloads based on the total latency associated with each potential resource available in the data center 100 (for example, the latency associated with the performance of the resource itself in addition to the latency associated with the path through the network between the compute node executing the workload and the node 300 on which the resource is located).

In some embodiments, the orchestrator server 920 may generate a map of heat generation in the data center 100 using telemetry data (for example, temperatures, fan speeds, etc.) reported from the nodes 300 and allocate resources to managed nodes as a function of the map of heat generation and predicted heat generation associated with different workloads, to maintain a target temperature and heat distribution in the data center 100. Additionally or alternatively, in some embodiments, the orchestrator server 920 may organize received telemetry data into a hierarchical model that is indicative of a relationship between the managed nodes (for example, a spatial relationship such as the physical locations of the resources of the managed nodes within the data center 100 and/or a functional relationship, such as groupings of the managed nodes by the users the managed nodes provide services for, the types of functions typically performed by the managed nodes, managed nodes that typically share or exchange workloads among each other, etc.). Based on differences in the physical locations and resources in the managed nodes, a given workload may exhibit different resource utilizations (for example, cause a different internal temperature, use a different percentage of processor or memory capacity) across the resources of different managed nodes. The orchestrator server 920 may determine the differences based on the telemetry data stored in the hierarchical model and factor the differences into a prediction of future resource utilization of a workload if the workload is reassigned from one managed node to another managed node, to accurately balance resource utilization in the data center 100. In some embodiments, the orchestrator server 920 may identify patterns in resource utilization phases of the workloads and use the patterns to predict future resource utilization of the workloads.

To reduce the computational load on the orchestrator server 920 and the data transfer load on the network, in some embodiments, the orchestrator server 920 may send self-test information to the nodes 300 to enable each node 300 to locally (for example, on the node 300) determine whether telemetry data generated by the node 300 satisfies one or more conditions (for example, an available capacity that satisfies a predefined threshold, a temperature that satisfies a predefined threshold, etc.). Each node 300 may then report back a simplified result (for example, yes or no) to the orchestrator server 920, which the orchestrator server 920 may utilize in determining the allocation of resources to managed nodes.

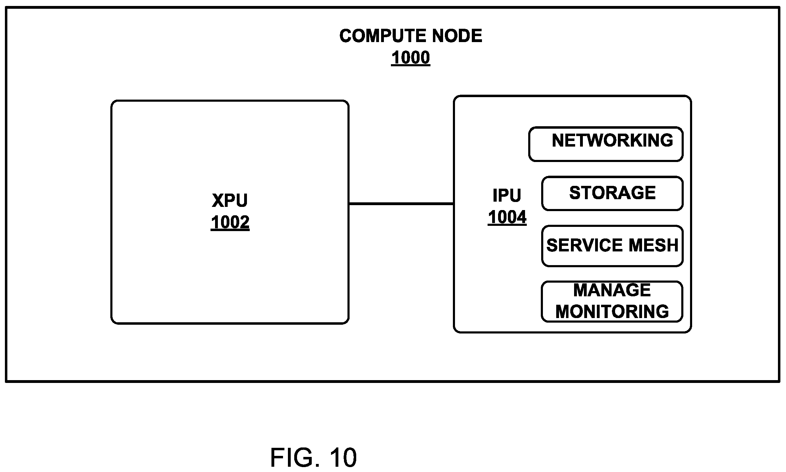

FIG. 10 illustrates a system that includes an IPU 1004 and an xPU 1002. Infrastructure Processing Units (IPUs) can be used by CSPs for performance, management, security and coordination functions in addition to infrastructure offload and communications. For example, IPUs can be integrated with smart NICs and storage or memory (for example, on a same die, system on chip (SoC), or connected dies) that are located at on-premises systems, base stations, gateways, neighborhood central offices, and so forth.

The IPU 1004 can perform an application composed of microservices. Microservices can include a decomposition of a monolithic application into small manageable defined services. Each microservice runs in its own process and communicates using protocols (for example, a Hypertext Transfer Protocol (HTTP) resource application programming interfaces (API), message service or Google remote procedure call (gRPC) calls/messages). Microservices can be independently deployed using centralized management of these services.

The IPU 1004 can execute platform management, networking stack processing operations, security (crypto) operations, storage software, identity and key management, telemetry, logging, monitoring and service mesh (e.g., control how different microservices communicate with one another). The IPU 1004 can access the xPU 1002 to offload performance of various tasks.

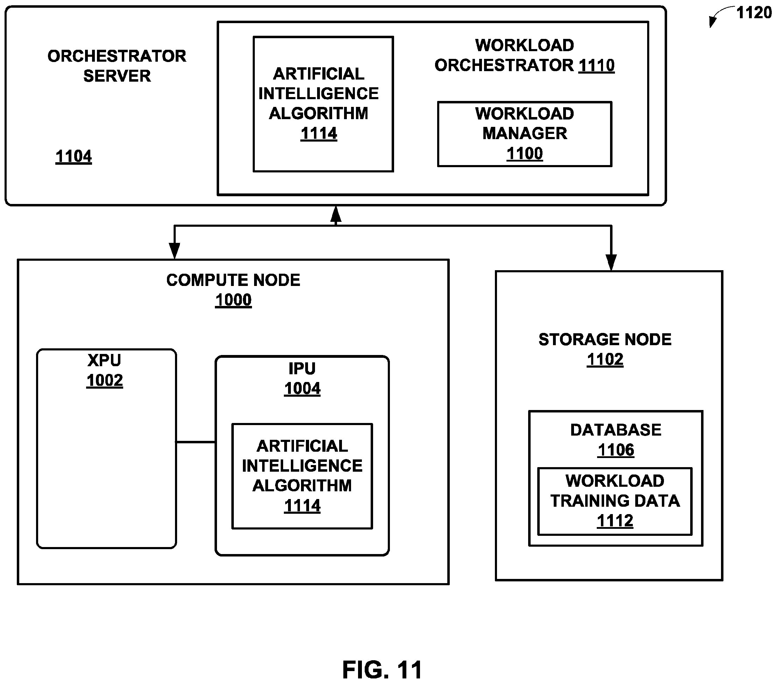

FIG. 11 is a simplified block diagram of a data center 1120 that includes a workload orchestrator 1110 in an orchestrator server 1104 and the compute node 1000 shown in FIG. 10. The workload orchestrator 1110 in the orchestrator server 1104 includes a workload manager 1100 and an Artificial Intelligence (AI) algorithm 1114 that includes a machine learning algorithm. Based on workload training data 1112 stored in a database 1106 in a storage node 1102, the workload orchestrator 1110 can determine resources to be used to deploy a workload.

A workload can refer to the amount of work that a program or application imposes on computing resources in a system. The workload is related to the amount of time and computing resources required to perform a specific task. The application can include multiple tasks, with each task (also referred to as a workload phase) having a different computing resources requirement. The workload orchestrator 1110 manages configuration of resources for each workload phase of the workload (application) and provides resiliency to secure the system. Each workload phase in a software application (workload) has a plurality of instructions that uses compute resources. Compute resources include CPU utilization to execute the instructions and memory resources to store the instructions for the workload phase.

The IPU 1004 in compute node 1000 provides an interface to the orchestrator server 1104 to discover resources in the data center 1120. The IPU 1004 can query status of the resources at any time. The IPU 1004 also performs resource management tasks requested by the orchestrator server 1104, for example, perform a reset of a resource or clear internal states of a resource.

The IPU 1004 characterizes utilization of resources for currently running jobs and can submit resource allocation requests to the workload orchestrator 1110 based on its needs. The IPU 1004 employs light-weight machine learning capabilities for workload characterizations and can recommend allocation of disaggregated resources based on workload, system, and network utilization. The allocation of disaggregated resources can include resources that are near the IPU 1004 and far from the IPU 1004.

The IPU 1004 can access the xPU 1002 to offload performance of various tasks. The xPU (or XPU) can refer to a graphics processing unit (GPU), general purpose GPU (GPGPU), field programmable gate array (FPGA), Accelerated Processing Unit (APU), accelerator or another processor.

The storage node 1102 includes a database 1106 to store workload training data 1112. The workload training data 1112 is generated by the IPU 1004 in compute node 1000 for workload phases using the Artificial Intelligence (AI) algorithm 1114 that includes a machine learning algorithm. The workload training data 1112 stores a configuration (also referred to as metadata) for each workload phase to maintain performance and security in the system. The workload training data 1112 can be accessed by the IPU 1004. The IPU 1004 can perform training and also periodically perform retraining. Other IPUs in the system can use a configuration for each workload phase stored in the workload training data 1112 to determine resource allocation for a workload phase.

The workload orchestrator 1110 monitors the metadata, and the performance of the system for each workload phase. Using the AI algorithm 1114, the workload orchestrator 1110 determines an optimal configuration for each workload phase to optimize performance and security in the system.

A workload phase can be a "light workload phase" or a "heavy workload phase". A "light workload phase" uses less computing resources (for example, processors, CPU clock cycles, storage Input/Output) than a "heavy workload phase". For example, a workload can include a first workload phase that does not use a lot of computing resources to perform initialization tasks and is thus a "light workload phase" and a second workload phase that uses a lot of computing resources to perform computation is thus a "heavy workload phase". For example, the workload phase for an xPU 1002 can be "heavy workload phase" during business hours and "light workload phase" outside business hours (weekend and night) when the xPU 1002 may be idle.

The workload orchestrator 1110 characterizes the resource requirements and redundancy for each workload phase to secure uninterrupted service in the event of compromised nodes or hardware failures. The number of nodes (for example, compute node 1000) used to perform tasks for the workload phase is dependent on the redundancy level for the workload phase. For example, the redundancy level is two when the workload phase runs concurrently on two nodes. The workload orchestrator 1110 can specify a redundancy level for a workload phase based on the security level of the workload phase. For example, based on the security level, the workload orchestrator 1110 can select a redundancy level for the workload phase such that the workload phase runs on more than one node. Running the workload phase on more than one node provides security for the system because if one node can no longer run the workload, the other nodes can continue to run the workload.

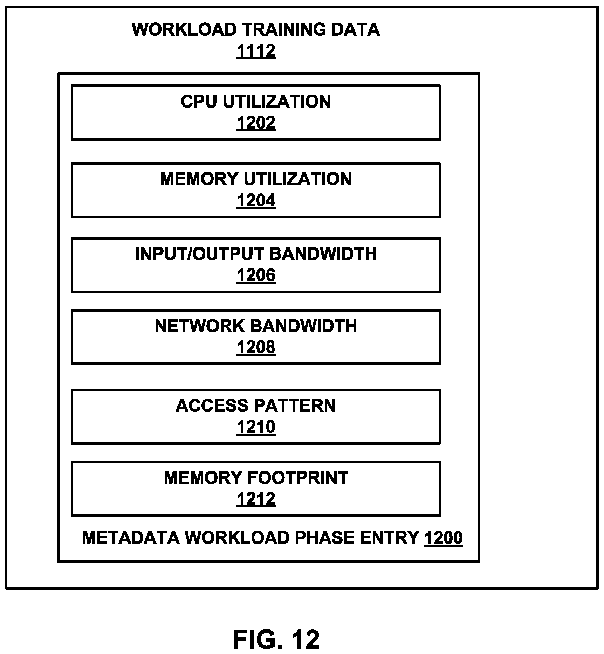

FIG. 12 illustrates types of metadata that can be stored in a metadata workload phase entry 1200 for the configuration of a workload phase in workload training data 1112 in the database 1106.

The metadata workload phase entry 1200 can include CPU utilization 1202, memory utilization 1204, I/O bandwidth 1206, network bandwidth 1208, access pattern 1210 and memory footprint 1212 for the workload phase.

The CPU utilization 1202 is the amount of work handled by a CPU for the workload phase.

The memory utilization 1204 is the amount of memory that is used by the workload phase. Memory utilization 1204 can be represented as a ratio of memory used by the workload phase to the total available memory.

The I/O bandwidth 1206 is the bandwidth used to connect the CPU to other devices, for example, a Network Interface Card (NIC).

The network bandwidth 1208 is the rate of data transfer over a network.

The access pattern 1210 is the method used to access data stored in memory, for example, random or sequential.

The memory footprint 1212 is the amount of memory used by the workload phase.

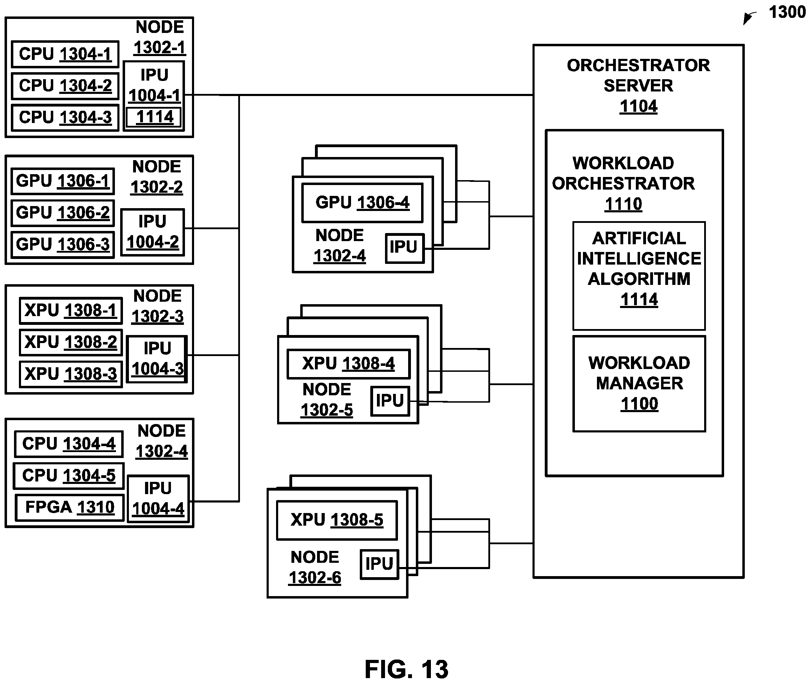

FIG. 13 is a block diagram of a system 1300 that includes the workload orchestrator 1110 and workload manager 1100 in the orchestrator server 1104 shown in FIG. 11 and a plurality of compute nodes 1302-1, 1302-2, 1302-3, 1302-4 to perform jobs with flexible resource requirements. Examples of jobs with flexible resource requirements include a job that sends multiple queries to the database 1106 and a job to perform validation, for example, to perform signal integrity simulations or register-transfer-level (RTL) simulations (design abstraction that models a synchronous digital circuit).

Each compute node 1302-1, ... 1302-4 includes one or more XPUs 1308-1, 1308-2, 1308-3, 1308-3 (for example, Central Processing Unit (CPU) 1304-1, 1304-2, 1304-3, 1304-4, 1304-5, Graphics Processing Unit (GPU) 1306-1, 1306-2, 1306-3 or a Field Programmable Gate Array (FPGA) 1310 for example, an accelerator). Each compute node 1302-1, ... 1302-4 also includes a respective IPU 1004-1, 1004-2, 1004-3, 1004-4.

At run time, the workload manager 1100 in the workload orchestrator 1110 compares the current workload phase with workload phase resources stored in the workload training data 1112 to allocate resources and identify the redundancy level for the current workload phase. The workload orchestrator 1110 monitors the compute nodes 1302-1, ... 1302-4 and schedules incoming requests from IPUs 1004-1, .... 1004-4 in the compute nodes 1302-1, ... 1302-4 that monitor jobs with flexible resource requirements. The IPUs 1004-1, .... 1004-4 and workload orchestrator1100 use machine learning to profile workloads, specify a redundancy level for each workload phase and predict a configuration to provide optimal performance and security

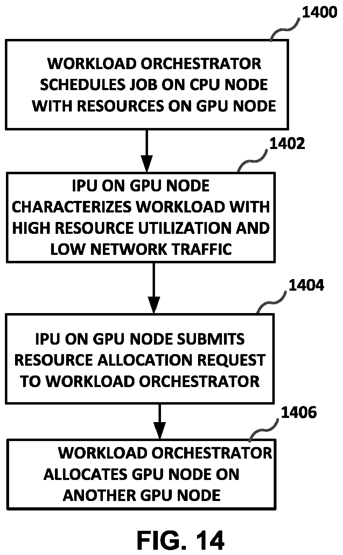

FIG. 14 is a flowgraph illustrating a method to provide resources to the compute nodes 1302-1, ... 1302-4 shown in FIG. 13 for jobs with dynamic resource requirements.

At block 1400, the workload orchestrator 1110 in the orchestrator server 1104 reviews the workload for a job based on the workload training data 1112. The workload orchestrator 1110 determines the resources required for the workload phase from the metadata workload phase entry 1200 for the workload phase to deploy to the workload phase. The workload orchestrator 1110 schedules the job with flexible resource requirements on a first compute node 1302-1 with CPUs 1304-1,...,1304-3 and a second compute node 1302-2 with GPUs 1306-1, 1306-2, 1306-3. For example, the workload orchestrator 1110 can schedule 20% of the application to run on compute nodes with GPUs 1306-1, 1306-2, 1306-3 and 30% to run on compute nodes with CPUs 1304-1, 1304-2, 1304-3.

At block 1402, IPU 1004-2 in the second compute node 1302-2 with GPUs 1306-1, 1306-2, 1306-3 characterizes the workload phase with a high resource utilization and low network bandwidth from the metadata workload phase entry 1200 for the workload phase in the workload training data 1112. For example, the IPU 1004-2 determines if the workload phase has a low network bandwidth by reading the network bandwidth 1208 for the workload phase stored in the metadata workload phase entry 1200. The IPU 1004-2 determines if the workload phase has a high resource utilization by reading the CPU utilization 1202 and/or the memory utilization 1204 for the workload phase stored in the metadata workload phase entry 1200.

At block 1404, during the workload phase, the AI algorithm 1114 in IPU 1004-1 in node 1302-1 optimizes for performance. If the compute node 1302-1 determines that additional resources are required, the IPU 1004-2 on the second compute node 1302-2 with GPUs submits a resource allocation request to the workload orchestrator 1110 in the orchestrator server 1104 to allocate more resources. For example, the IPU 1004-2 can submit a resource allocation request to the workload orchestrator 1110 in the orchestrator server 1104 for additional GPUs with low network bandwidth for use by the first compute node 1302-1 with CPUs 1304-1, 1306-2, 1304-3.

At block 1406, the workload orchestrator 1110 in the orchestrator server 1104 allocates one or more additional GPUs 1306-4 on another compute node with GPUs 1302-5 to meet the network bandwidth requirements and the GPU resource request from the IPU 1004-2 on the second compute node 1302-2 with GPUs.

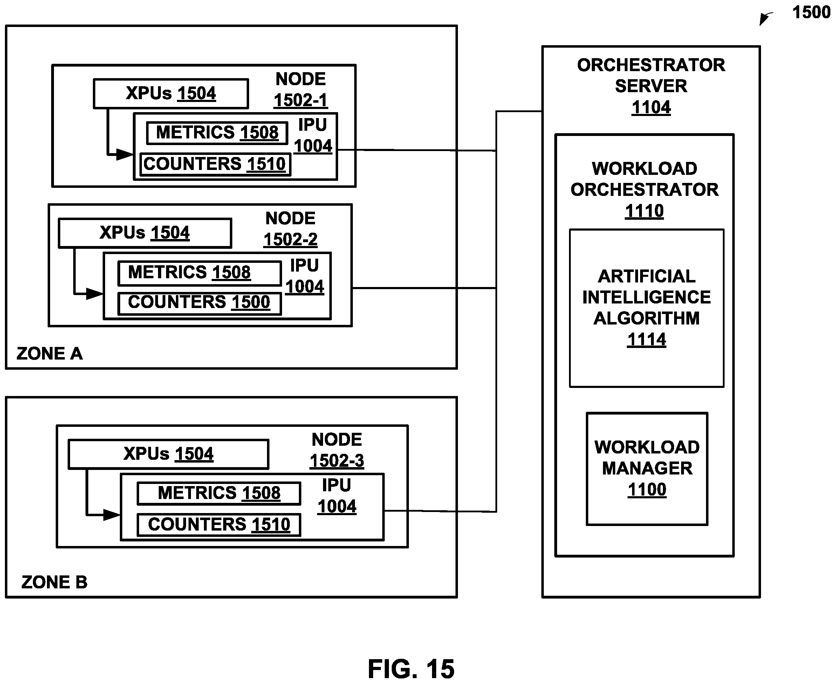

FIG. 15 is a block diagram of a system 1500 that includes the workload orchestrator 1110 and workload manager 1100 in the orchestrator server 1104 shown in FIG. 11 and zones (Zone A and Zone B) that include compute nodes 1502-1, 1502-2, 1502-3. Each compute node 1502-1, 1502-2, 1502-3 includes one or more XPUs 1504 and an IPU 1004.

System 1500 includes the artificial intelligence algorithm 1114 (also referred to as an Artificial Intelligence (AI) model) that predicts changes in demand for compute in compute nodes 1502-1, 1502-2, 1502-3 based on aggregated data stored in the workload manager 1100. The workload orchestrator 1110 can use prediction data provided by the artificial intelligence algorithm 1114. The prediction data can be used to improve future generation XPUs 1504.

An IPU 1004 in compute node 1502-1 manages metrics (software metrics) 1508 and counters (hardware counters) 1510 for the compute node 1502-1. The metrics 1508 include applications, metadata and trends. Applications are deployed on an XPU 1504, for example, the application can be a mail service or a web service. Metadata is a set of keywords that describe the workload, for example: for a mail service, the metadata can include "email" and for a web server, the metadata can include "messages", "restaurant recommender". Trends are computed based on past behavior of applications and devices.

The IPU 1004 communicates with the workload orchestrator 1110 to share information about the IPU 1004 that is stored in metrics 1508 and counters 1510 in a database in the IPU 1004. The information that is stored in metrics 1508 and counters 1510 in the IPU 1004 can represent the health and usage of the IPU 1004. The workload orchestrator 1110 can be distributed across multiple compute nodes 1502-1, 1502-2, 1502-3 and other nodes (for example, accelerator nodes and storage nodes) with an instance of the workload orchestrator 1110 deployed on each IPU 1004.

The IPU 1004 in any one of compute nodes 1502-1, 1502-2, 1502-3 can communicate with multiple compute nodes 1502-1, 1502-2, 1502-3 to ensure uptime (the time the system 1500 has been "up" computed from the last reboot of the system 1500). Uptime can be ensured by predicting uptime of one device (compute node, XPU or IPU) based on how often it needed to be restarted in the past and then deploying on multiple devices if the uptime is not sufficient.

In addition, the IPUs 1004 in the compute nodes 1502-1, 1502-2, 1502-3 can form a pool of resources. The pool of resources can be mapped to a zone (locations).

In the system 1500 shown in FIG. 15, there are two zones, labeled Zone A and Zone B. There are two compute nodes 1502-1, 1502-2 in Zone A and one compute node 1502-3 in Zone B. The pool of resources can also correspond to functionality. For example, a functionality can be an AI accelerator that can be referred to as Type 1. An IPU 1004 in Zone A with Type I functionality belongs to the pool of IPUs in Zone A and all pools of IPUs with Type I functionality in other zones.

A pool of IPUs 1004 can have a level of autonomy and can communicate with the workload orchestrator 1110 as a single entity. Each IPU 1004 is a member of the pool of IPUs.

Instead of sending more frequent individual messages, the compute nodes can batch multiple messages into one large message or even eliminate the need to send some of the smaller messages. This helps to scale traffic by creating larger chunks of communications. The pool of IPUs 1004 also helps when managing lots of nodes (for example, accelerator nodes and compute node) could get very complex. When the pool of resources manages its workloads and resources, important workloads can be mirrored to guarantee uptime and reliability.

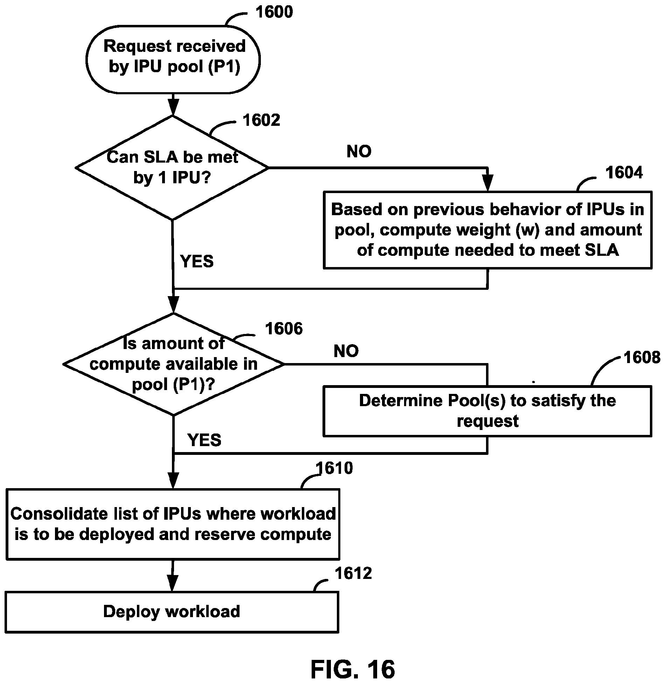

FIG. 16 is a flowgraph illustrating a method performed in the workload orchestrator 1110 to deploy a workload in the system shown in FIG. 15.

At block 1600, an IPU pool receives a request. The request includes a type of IPU (for example, an AI accelerator, specialized security compute), an amount of compute and a Service Level Agreement (SLA). Amount of compute is how much of each compute node is idle (for example, CPU, accelerator and memory). An SLA can include quality of service (QoS) targets (for example, throughput, latency, number of instructions per second) for the workload.

At block 1602, if the SLA can be met by one IPU, processing continues with block 1606. If not, processing continues with block 1604.

At block 1604, based on previous behavior of the IPUs in the IPU pool, the weight and amount of compute needed to meet the SLA is determined. The previous behavior of the IPUs can be obtained from the AI algorithm 1114. The weight is a number that represents importance and that is used as a multiplier. Processing continues with block 1606.

At block 1606, if the amount of compute needed to meet the SLA is available in the IPU pool, processing continues with block 1610. If not, processing continues with block 1608.

At block 1608, a request for compute is sent to a set of IPU pools, starting with the IPU pools in Zone A to determine the IPU pools that can satisfy the request for compute. The goal is to minimize the number of IPU pools used to deploy a workload to minimize the number of nodes used per application.

At block 1610, the IPU pools to be used to deploy the workload are combined and are reserved.

At block 1612, the workload is deployed on the reserved IPU pools.

Flow diagrams as illustrated herein provide examples of sequences of various process actions. The flow diagrams can indicate operations to be executed by a software or firmware routine, as well as physical operations. In one embodiment, a flow diagram can illustrate the state of a finite state machine (FSM), which can be implemented in hardware and/or software. Although shown in a particular sequence or order, unless otherwise specified, the order of the actions can be modified. Thus, the illustrated embodiments should be understood only as an example, and the process can be performed in a different order, and some actions can be performed in parallel. Additionally, one or more actions can be omitted in various embodiments; thus, not all actions are required in every embodiment. Other process flows are possible.

To the extent various operations or functions are described herein, they can be described or defined as software code, instructions, configuration, and/or data. The content can be directly executable ("object" or "executable" form), source code, or difference code ("delta" or "patch" code). The software content of the embodiments described herein can be provided via an article of manufacture with the content stored thereon, or via a method of operating a communication interface to send data via the communication interface. One or more non-transitory machine-readable storage media can cause a machine to perform the functions or operations described, and includes any mechanism that stores information in a form accessible by a machine (for example, computing device, electronic system, etc.), such as recordable/non-recordable media (for example, read only memory (ROM), random access memory (RAM), magnetic disk storage media, optical storage media, flash memory devices, etc.). A communication interface includes any mechanism that interfaces to any of a hardwired, wireless, optical, etc., medium to communicate to another device, such as a memory bus interface, a processor bus interface, an Internet connection, a disk controller, etc. The communication interface can be configured by providing configuration parameters and/or sending signals to prepare the communication interface to provide a data signal describing the software content. The communication interface can be accessed via one or more commands or signals sent to the communication interface.

Various components described herein can be a means for performing the operations or functions described. Each component described herein includes software, hardware, or a combination of these. The components can be implemented as software modules, hardware modules, special-purpose hardware (for example, application specific hardware, application specific integrated circuits (ASICs), digital signal processors (DSPs), etc.), embedded controllers, hardwired circuitry, etc.

Besides what is described herein, various modifications can be made to the disclosed embodiments and implementations of the invention without departing from their scope.

Therefore, the illustrations and examples herein should be construed in an illustrative, and not a restrictive sense. The scope of the invention should be measured solely by reference to the claims that follow.

### EXAMPLES

Illustrative examples of the technologies disclosed herein are provided below. An embodiment of the technologies may include any one or more, and any combination of, the examples described below.

Example 1 is a server that includes a plurality of compute resources. A compute resource includes an Infrastructure Processing Unit. The server includes a storage device to store workload training data associated with a workload and a workload orchestrator in communication with the plurality of compute resources. The workload orchestrator to use the workload training data to manage the Infrastructure Processing Unit to provide redundancy and optimal configuration of resources for each workload phase of the workload.

Example 2 includes the server of Example 1, wherein the Infrastructure Processing Unit and workload orchestrator to use machine learning to profile workloads, specify a redundancy level for each workload phase and predict a configuration to provide optimal performance and security.

Example 3 includes the server of Example 2, wherein the Infrastructure Processing Unit to recommend allocation of resources based on workload, system, and network utilization.

Example 4 includes the server of Example 2, wherein Infrastructure Processing Unit to use machine learning to generate the workload training data.

Example 5 includes the server of Example 2, wherein another Infrastructure Processing Unit to use a configuration for each workload phase stored in the workload training data to determine resource allocation for a workload phase.

Example 6 includes the server of Example 2, wherein the workload orchestrator to specify a redundancy level for a workload phase based on a security level of the workload phase.

Example 7 includes the server of Example 1, wherein the workload orchestrator comprising a workload manager, the workload manager to compare a current workload phase with workload phase resources stored in the workload training data to allocate resources and identify a redundancy level for the current workload phase.

Example 8 includes the server of Example 1, wherein if a first compute node determines that additional resources are required, a second Infrastructure Processing Unit in a second compute node to submit a resource allocation request to the workload orchestrator to allocate more resources.

Example 9 includes the server of Example 1, wherein the Infrastructure Processing Unit is a member of a pool of Infrastructure Processing Units, the pool of Infrastructure Processing Units to communicate with the workload orchestrator as a single entity.

Example 10 is a system that includes a plurality of compute resources. A compute resource including an Infrastructure Processing Unit. The system includes a storage device to store workload training data associated with a workload. The system includes
one or more non-transitory machine-readable storage media comprising a plurality of instructions stored thereon that, in response to being executed, cause the system to
use the workload training data to manage the Infrastructure Processing Unit to provide redundancy and optimal configuration of resources for each workload phase of the workload.

Example 11 includes the system of Example 10, wherein the Infrastructure Processing Unit to use machine learning to profile workloads, specify a redundancy level for each workload phase and predict a configuration to provide optimal performance and security.

Example 12 includes the system of Example 11, wherein the Infrastructure Processing Unit to recommend allocation of resources based on workload, system, and network utilization.

Example 13 includes the system of Example 11, wherein Infrastructure Processing Unit to use machine learning to generate the workload training data.

Example 14 includes the system of Example 11, wherein another Infrastructure Processing Unit to use a configuration for each workload phase stored in the workload training data to determine resource allocation for a workload phase.

Example 15 includes the system of Example 11, wherein the system to specify a redundancy level for a workload phase based on a security level of the workload phase.

Example 16 includes the system of Example 10, wherein the system to compare a current workload phase with workload phase resources stored in the workload training data to allocate resources and identify a redundancy level for the current workload phase.

Example 17 includes the system of Example 10, wherein if a first compute node determines that additional resources are required, a second Infrastructure Processing Unit in a second compute node to submit a resource allocation request to allocate more resources.

Example 18 includes the system of Example 10, wherein the Infrastructure Processing Unit is a member of a pool of Infrastructure Processing Units, the pool of Infrastructure Processing Units to communicate as a single entity.

Example 19 is a method including storing, in a storage device, workload training data associated with a workload. The method using, by a workload orchestrator in communication with a plurality of compute resources, a compute resource including an Infrastructure Processing Unit, the workload training data to manage the Infrastructure Processing Unit to provide redundancy and optimal configuration of resources for each workload phase of the workload.

Example 20 includes the method of Example 19, wherein the Infrastructure Processing Unit and workload orchestrator to use machine learning to profile workloads, specify a redundancy level for each workload phase and predict a configuration to provide optimal performance and security.

Example 21 is an apparatus comprising means for performing the methods of any one of the Examples 19 to 20.

Example 22 is a machine readable medium including code, when executed, to cause a machine to perform the method of any one of claims 19 to 20.

Example 22 is a machine-readable storage including machine-readable instructions, when executed, to implement the method of any one of claims 19 to 20.

## Claims

1. A server comprising:
a plurality of compute resources, a compute resource including an Infrastructure Processing Unit;
a storage device to store workload training data associated with a workload; and
a workload orchestrator in communication with the plurality of compute resources, the workload orchestrator to use the workload training data to manage the Infrastructure Processing Unit to provide redundancy and optimal configuration of resources for each workload phase of the workload.

2. The server of Claim 1, wherein the Infrastructure Processing Unit and workload orchestrator to use machine learning to profile workloads, specify a redundancy level for each workload phase and predict a configuration to provide optimal performance and security.

3. The server of Claim 2, wherein the Infrastructure Processing Unit to recommend allocation of resources based on workload, system, and network utilization.

4. The server of Claim 2, wherein Infrastructure Processing Unit to use machine learning to generate the workload training data.

5. The server of Claim 2, wherein another Infrastructure Processing Unit to use a configuration for each workload phase stored in the workload training data to determine resource allocation for a workload phase.

6. The server of Claim 2, wherein the workload orchestrator to specify a redundancy level for a workload phase based on a security level of the workload phase.

7. The server of Claim 1, wherein the workload orchestrator comprising a workload manager, the workload manager to compare a current workload phase with workload phase resources stored in the workload training data to allocate resources and identify a redundancy level for the current workload phase.

8. The server of Claim 1, wherein if a first compute node determines that additional resources are required, a second Infrastructure Processing Unit in a second compute node to submit a resource allocation request to the workload orchestrator to allocate more resources.

9. The server of Claim 1, wherein the Infrastructure Processing Unit is a member of a pool of Infrastructure Processing Units, the pool of Infrastructure Processing Units to communicate with the workload orchestrator as a single entity.

10. A method comprising:
storing, in a storage device, workload training data associated with a workload; and
using, by a workload orchestrator in communication with a plurality of compute resources, a compute resource including an Infrastructure Processing Unit, the workload training data to manage the Infrastructure Processing Unit to provide redundancy and optimal configuration of resources for each workload phase of the workload.

11. The method of Claim 10, wherein the Infrastructure Processing Unit and workload orchestrator to use machine learning to profile workloads, specify a redundancy level for each workload phase and predict a configuration to provide optimal performance and security.

12. The method of Claim 11, wherein another Infrastructure Processing Unit to use a configuration for each workload phase stored in the workload training data to determine resource allocation for a workload phase.

13. The method of Claim 11, wherein the workload orchestrator to specify a redundancy level for a workload phase based on a security level of the workload phase.

14. An apparatus comprising means for performing the methods of any one of claims 10 to 13.

15. Machine-readable storage including machine-readable instructions, when executed, to implement the method of any one of claims 8 to 13.
